# Europäisches Patentamt
## European Patent Office
## Office européen des brevets

(19)

(11) Veröffentlichungsnummer : **0 209 015**
**B1**

(12)

# EUROPÄISCHE PATENTSCHRIFT

(45) Veröffentlichungstag der Patentschrift :
28.09.88

(51) Int. Cl.⁴ : **C 25 D 17/28**, B 65 G 49/04

(21) Anmeldenummer : 86109137.9

(22) Anmeldetag : 04.07.86

(54) Einrichtung zur Oberflächenbehandlung von schüttfähigem Gut.

(30) Priorität : 09.07.85 DE 3524510
15.05.86 DE 3616339

(43) Veröffentlichungstag der Anmeldung :
21.01.87 Patentblatt 87/04

(45) Bekanntmachung des Hinweises auf die Patenterteilung : 28.09.88 Patentblatt 88/39

(84) Benannte Vertragsstaaten :
AT BE CH DE FR GB IT LI NL SE

(56) Entgegenhaltungen :
CH-A- 594 072
FR-A- 2 103 611
US-A- 3 649 490

(73) Patentinhaber : Siemens Aktiengesellschaft Berlin
und München
Wittelsbacherplatz 2
D-8000 München 2 (DE)

(72) Erfinder : Birkle, Siegfried, Dr.
Veit-Stoss-Strasse 46
D-8552 Höchstadt (DE)
Erfinder : Gehring, Johann
Hohe Warte 2
D-8521 Spardorf (DE)

Jouve, 18, rue St-Denis, 75001 Paris, France

## Beschreibung

Die Erfindung betrifft eine Einrichtung zur Oberflächenbehandlung von Schüttfähigem Gut, insbesondere zum galvanischen Abscheiden von Aluminium aus aprotischen, sauerstoff- und wasserfreien, aluminiumorganischen Elektrolyten, mit

- einer Wanne zur Aufnahme eines Behandlungsbades,
- einem Schwingförderer mit wendelförmig nach oben geführter Förderbahn für den Transport des Gutes durch das Behandlungsbad und mit
- einem oberhalb des Behandlungsbades an einer zentralen Tragsäule des Schwingförderers befestigten Vibrator.

Eine derartige Einrichtung für die elektrolytische Behandlung von schüttfähigem Gut ist aus der US-A 3 649 490 bekannt. Für den Transport des Galvanisiergutes durch den Elektrolyten ist bei dieser bekannten Einrichtung ein Schwingförderer mit wendelförmig nach oben geführter Förderbahn vorgesehen. Die über eine zentrale Tragsäule an einem Vibrator befestigte wendelförmige Förderbahn ist dabei von oben her in das Behandlungsbad eingehängt, wobei der Vibrator seinerseits über dem Badspiegel federnd auf einem Querträger angeordnet ist.

Eine ähnliche Einrichtung zur Beschichtung oder Reinigung von schüttfähigem Gut ist aus der US-A- 3 216 431 bekannt. Hier ist der Querträger jedoch in einer geschlossenen Wanne angeordnet, wobei die Oberseite des Vibrators an dem Querträger aufgehängt ist.

Bei den bekannten Einrichtungen werden die Vibratoren durch Unwuchtmassen derart angetrieben, daß die Förderbahnen über die zentralen Tragsäulen zu Schwingungen mit einer etwa schraubenförmigen Bewegung angeregt werden. Aufgrund der schiefen Bewegung und der dabei auftretenden Beschleunigungen und Geschwindigkeiten wird dem auf der wendelförmig nach oben führenden Förderbahn liegenden Gut ein schiefer Wurf aufgezwungen, so daß das schüttfähige Gut unter Gewinn an Höhe in Förderrichtung nach oben transportiert wird. Die Eigenschwingungsfrequenz des aus Vibrator, zentraler Tragsäule und wendelförmiger Förderbahn bestehenden Systems muß weit genug unterhalb der Frequenz der Bewegung liegen, so daß beim Betrieb keine unkontrollierbaren Resonanzschwingungen auftreten. Beim Abschalten wird der Bereich der Eigenschwingungsfrequenz dann mit Hilfe einer speziellen Regeleinrichtung so rasch durchfahren, daß keine schädlichen Resonanzschwingungen auftreten können. Bei einem Ausfall der Regeleinrichtung oder bei einem Stromausfall kommt es jedoch im Bereich der Eigenschwingungsfrequenz zu unkontrollierbaren Taumelbewegungen des schwingfähigen Systems die insbesondere bei geschlossenen, kompakten Einrichtungen zu erheblichen Zerstörungen führen.

Der Erfindung liegt die Aufgabe zugrunde eine Einrichtung der eingangs genannten Art so zu verbessern, daß selbst beim Durchlaufen des kritischen Schwingungsbereichs keine schädlichen Resonanzschwingungen auftreten können.

Diese Aufgabe wird erfindungsgemäß dadurch gelöst, daß der Vibrator an seiner Oberseite mit einem Zapfen verbunden ist, mittels welchen er drehbar und zumindest in geringem Umfang heb- und senkbar zentriert ist. Ein derartiger Zapfen läßt die für die Förderung des Gutes erforderlichen Schwingungen mit einer etwa schraubenförmigen Bewegung zu, während Schwingungen in anderen Richtungen und insbesondere Taumelbewegungen im kritischen Resonanzbereich vollständig verhindert werden. Durch den Zapfen ergibt sich eine Führung des gesamten schwingungsfähigen Systems die eine wesentlich kompaktere Bauweise als bei den bekannten Einrichtungen zuläßt. So können beispielsweise bei Einrichtungen für die elektrolytische Oberflächenbehandlung wendelförmige Elektroden mit geringem Abstand parallel zu der wendelförmigen Förderbahn angeordnet werden.

Gemäß einer bevorzugten Ausgestaltung der Erfindung ist die Tragsäule auf einer in der Wanne schwingungsfähig gelagerten Tragplatte angeordnet. Hierbei wird die Führung des gesamten schwingungsfähigen Systems noch weiter verbessert und die Einbeziehung der gesamten Schwingungserregung in die Wanne begünstigt.

Bei einer geschlossenen Wanne wird der Zapfen vorzugsweise in einem oberen Deckel der Wanne zentriert. Ein gesonderter Querträger kann dann entfallen.

Eine erfindungsgemäße Einrichtung kann mit relativ geringem Aufwand unter Luftabschluß betrieben und beispielsweise für die galvanische Abscheidung von Aluminium aus aprotischen, sauerstoff- und wasserfreien aluminiumorganischen Elektrolyten eingesetzt werden. In diesem Fall ist die Wanne gasdicht verschließbar, während der Raum oberhalb des Behandlungsbades mit einem Inertgas beaufschlagbar ist. Die durch die Zentrierung des Vibrators erheblich verbesserte Betriebssicherheit verbessert dann auch den Schutz des Elektrolyten vor dem Zutritt von Luftsauerstoff und Luftfeuchtigkeit. Weitere Einzelheiten über unter Luftabschluß arbeitende Einrichtungen zum galvanischen Abscheiden von Aluminium und insbesondere über die Verwendung von Ein- und Ausfuhrschleusen gehen beispielsweise aus der EP-A- 00 70 011 hervor.

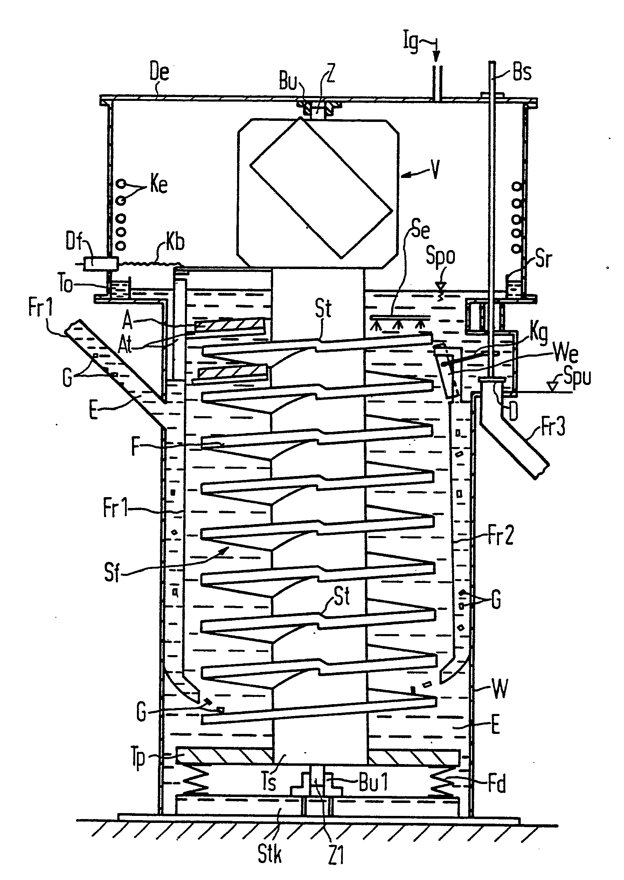

Ein Ausführungsbeispiel der Erfindung ist in der Zeichnung dargestellt und wird im folgenden näher beschrieben.

Die Zeichnung zeigt in stark vereinfachter schematischer Darstellung eine mit einer wendelförmigen Schwingrinne ausgerüstete Einrichtung zum galvanischen Abscheiden von Aluminium.

Die Zeichnung zeigt eine turmförmige Einrichtung zum galvanischen Abscheiden von Aluminium. In einer unmittelbar auf dem Flur angeordneten und mit Hilfe eines Deckels De gasdicht verschlossenen kreiszylindrischen Wanne W befindet sich ein aprotischer, sauerstoff- und wasserfreier, aluminiumorganischer Elektrolyt E. Der Oberhalb des Spiegels Spo des Elektrolyten E liegende Bereich der Wanne W wird mit einem Inertgas, wie z. B. Stickstoff, beaufschlagt, wobei die Zufuhr dieses Inertgases durch einen Pfeil Ig aufgezeigt ist.

Das zu aluminierende Gut G, bei welchem es sich beispielsweise um Bolzen, Muttern, Schrauben Abstandsbuchsen und dergl. handelt, wird über eine (in der Zeichnung nicht dargestellte) Einfuhrschleuse und ein Fallrohr Frl in die Wanne W eingebracht und fällt dann auf das untere Ende der Förderbahn F eines innerhalb der Wanne W angeordneten und insgesamt mit Sf bezeichneten Schwingförderers. Auf der als Schwingrinne ausgebildeten und wendelförmig nach oben führenden Förderbahn F wird das Gut G durch den Elektrolyten E nach oben transportiert und fällt dann auf eine als kurze Rinne ausgebildete Weiche We. Auf dem Weg nach oben passiert das Gut G mehrere nach unten führende Stufen St der Förderbahn F, deren Stufenhöhe so bemessen ist, daß sich das Gut beim Fallen dreht und eine verbesserte Durchmischung des Gutes G erzielt wird. Bei der dargestellten Stellung der Weiche We gelangt das Gut G in ein als Rückführeinrichtung dienendes Fallrohr Fr2, welches das Gut G wieder zum untersten Gang der Förderbahn F zurückführt. Bei der dargestellten Stellung der Weiche We wird das Gut G also im Umlauf durch den Elektrolyten E gefördert. Vor einer Umstellung der Weiche We wird der Spiegel Spo des Elektrolyten E auf ein unteres Niveau Spu abgesenkt, welches unterhalb der oberen Öffnung eines zum Austrag des Gutes G nach außen geführten Fallrohres Fr3 liegt. Die Absenkung des Elektrolytspiegels, die in der Zeichnung nicht dargestellt ist, kann beispielsweise über eine Umwälzpumpe und ein mit Inertgas beaufschlagtes Speichergefäß vorgenommen werden. Um bei angehobenem Spiegel Spo ein Ausfließen des Elektrolyten E durch das austragsseitige Fallrohr Fr3 zu verhindern, ist dessen obere Öffnung durch einen Deckel D verschließbar, wobei das Öffnen und Schließen dieses Deckels D über eine nach außen geführte Betätigungsstange Bs pneumatisch oder hydraulisch vorgenommen werden kann. Die Weiche We ist dabei über ein Koppelglied Kg derart an die Betätigungsstange Bs angelenkt, daß mit dem Öffnungshub des Deckels D eine Umstellung erfolgt und das Gut G dann in das Fallrohr Fr3 fällt und in eine (in der Zeichnung nicht dargestellte) Ausführungsschleuse gelangt.

Die wendelförmige Förderbahn F ist an einer zentrisch angeordneten Tragsäule Ts befestigt, deren unteres Ende über eine Tragplatte Tp und mehrere Federn Fd schwingungsfähig auf einem Standkreuz Stk gelagert ist und deren oberes Ende in dem oberhalb des gehobenen Spiegels Spo liegenden Bereich einen Vibrator V trägt. Der im Hinblick auf seine Funktion nicht näher dargestellte Vibrator V ist dabei über einen Zapfen Z am Deckel De drehbar und auch im geringen Umfang heb- und senkbar zentriert. Hierzu ist an der Unterseite des Deckels De eine den Zapfen Z aufnehmende Buchse Bu befestigt. In ähnlicher Weise ist die Unterseite der Tragsäule Ts über einen Zapfen Z1 heb- und senkbar zentriert. Hierzu ist auf der Oberseite des auf dem Boden der Wanne W angeordneten Standkreuzes Stk eine den Zapfen Z1 aufnehmende Buchse Bul befestigt.

Das schüttfähige Gut wird über die Förderbahn F kathodisch kontaktiert, wobei die Förderbahn F über die Tragsäule Ts und nicht dargestellte Anschlußmittel mit dem Minuspol einer äußeren Stromquelle verbunden ist. Eine mit Abstand parallel zur Förderbahn F angeordnete wendelförmige Anode A ist zur Vereinfachung der zeichnerischen Darstellung lediglich im Bereich der oberen Gänge angedeutet. Die Befestigung der Anode A, die auch aus mehreren wendelförmigen Segmenten zusammengesetzt sein kann, erfolgt über einen in der Zeichnung ebenfalls nur angedeuteten Anodenträger At, der über ein Kabel Kb und eine gasdichte und elektrisch isolierende Durchführung Df mit dem Pluspol der äußeren Spannungsquelle verbunden ist.

Oberhalb des abgesenkten Spiegels Spo des Elektrolyten E ist eine (in der Zeichnung nur angedeutete) Sprüheinrichtung Se angeordnet, welche das an einer Kondensationseinrichtung Ke kondensierte und in einer Sammelrinne Sr aufgefangene Toluol To in der Austragsphase auf das Gut G sprüht und die noch anhaftenden Elektrolytreste abspült.

Die in der Zeichnung dargestellte Einrichtung wird chargenweise mit dem Gut G beschickt und so lange im Umlauf betrieben, bis die Aluminiumabscheidung die gewünschte Schichtdicke erreicht hat. Danach wird der Elektrolyt E auf den unteren Spiegel Spu abgesenkt, die Weiche We bei gleichzeitiger Öffnung des Deckels D umgestellt und das fertig aluminierte und mit Hilfe der Sprüheinrichtung Se gereinigte Gut G ausgetragen. Das aus Vibrator V, Tragsäule Ts und wendelförmiger Förderbahn F bestehende System ist über die Tragplatte Tp und die Federn Fd schwingungsfähig auf dem Boden der Wanne W gelagert und oben mit Hilfe des Zapfens Z zentriert. Hierdurch ergibt sich eine Führung des Systems, die nur die zur Förderung des Gutes G erforderlichen Hub- und Drehschwingungen zuläßt. Außerdem können andere Teile wie die Anoden A und die Anodenträger At mit geringem Abstand zu den schwingenden Teilen eingebaut werden. Selbst bei einem Versagen der Regeleinrichtung des Vibrators V oder bei einem Stromausfall werden schädliche Resonanzschwingungen zumindest so weitgehend verhindert, daß keine Schädigungen oder Zerstörungen eintreten.

Bezugszeichenliste

| | |
|---|---|
| A | Anode |
| At | Anodenträger |
| Bs | Betätigungsstange |

| | |
|---|---|
| Bu, Bul | Buchse |
| D | Deckel |
| De | Deckel |
| Df | Durchführung |
| E | Elektrolyt |
| F | Förderbahn |
| Fd | Feder |
| Fr1, Fr2, Fr3 | Fallrohr |
| G | schüttfähiges Gut |
| Ig | Inertgas |
| Kb | Kabel |
| Ke | Kondensationseinrichtung |
| Kg | Koppelglied |
| Se | Sprüheinrichtung |
| Sf | Schwingförderer |
| Spo | Elektrolytspiegel, oberes Niveau |
| Spu | Elektrolytspiegel, unteres Niveau |
| Sr | Sammelrinne |
| St | Stufe |
| Stk | Standkreuz |
| To | Toluol |
| Tp | Tragplatte |
| Ts | Tragsäule |
| V | Vibrator |
| W | Wanne |
| We | Weiche |
| Z, Z1 | Zapfen |

## Patentansprüche

1. Einrichtung zur Oberflächenbehandlung von schüttfähigem Gut, insbesondere zum galvanischen Abscheiden von Aluminium aus aprotischen, sauerstoff- und wasserfreien aluminiumorganischen Elektrolyten, mit

- einer Wanne zur Aufnahme eines Behandlungsbades,
- einem Schwingförderer mit wendelförmig nach oben geführter Förderbahn für den Transport des Gutes durch das Behandlungsbad und mit
- einem oberhalb des Behandlungsbades an einer zentralen Tragsäule des Schwingförderers befestigten Vibrator, dadurch gekennzeichnet, daß der Vibrator (V) an seiner Oberseite mit einem Zapfen (Z) verbunden ist, mittels welcher er drehbar und zumindest in geringem Umfang heb- und senkbar zentriert ist.

2. Einrichtung nach Anspruch 1, dadurch gekennzeichnet, daß die Tragsäule (Ts) auf einer in der Wanne (W) schwingungsfähig gelagerten Tragplatte angeordnet ist.

3. Einrichtung nach Anspruch 1 oder 2, dadurch gekennzeichnet, daß der Zapfen (Z) in einem oberen Deckel (De) der Wanne (W) zentriert ist.

4. Einrichtung nach einem der vorhergehenden Ansprüche, dadurch gekennzeichnet, daß die Wanne (W) gasdicht verschließbar ist und daß der Raum oberhalb des Behandlungsbades mit einem Inertgas (Ig) beaufschlagbar ist.

## Claims

1. Apparatus for the surface treatment of loose goods, in particular for the electrodeposition of aluminium from aprotic oxygen-free and anhydrous organoaluminium electrolytes, having
— a vat for receiving the treatment bath,
— a vibrating conveyor with a conveyor track directed helically upwards for conveying the goods through the treatment bath, and having
— a vibrator attached, above the treatment bath, to a central supporting column of the vibrating conveyor, characterised in that the vibrator (V) is linked at its top face to a journal (Z) by means of which it is rotatably centred so as to be capable of being raised and lowered, at least to a small extent.

2. Apparatus according to Claim 1, characterised in that the supporting column (Ts) is arranged on a supporting plate mounted in a vibratory manner in the vat (W).

3. Apparatus according to Claim 1 or 2, characterised in that the journal (Z) is centred in a top cover (De) of the vat (W).

4. Apparatus according to one of the preceding Claims, characterised in that the vat (W) can be closed in a gas-tight manner and in that the space above the treatment bath is charged with an inert gas (Ig).

## Revendications

1. Dispositif pour réaliser le traitement de surface d'objets en vrac, notamment pour réaliser le dépôt galvanique d'aluminium à partir d'électrolytes aprotiques organiques, à base d'aluminium, exempts d'oxygène et d'eau, et comportant
- une cuve servant à recevoir un bain de traitement,
- un convoyeur oscillant comportant une voie d'entraînement s'élevant vers le haut suivant une forme hélicoïdale, pour le transport des objets à l'intérieur du bain de traitement, et
- un vibrateur fixé au-dessus du bain de traitement sur une colonne centrale de support du convoyeur oscillant, caractérisé par le fait que le vibrateur (V) est relié, au niveau de sa face supérieure, à un tourillon (Z), au moyen duquel il peut être entraîné en rotation et être soulevé et être abaissé au moins à un faible degré.

2. Dispositif suivant la revendication 1, caractérisé par le fait que la colonne de support (Ts) est disposée sur une plaque de support montée dans la cuve (W) de manière à pouvoir osciller.

3. Dispositif suivant la revendication 1 ou 2, caractérisé par le fait que le tourillon (Z) est centré dans un couvercle supérieur (De) de la cuve (W).

4. Dispositif suivant l'une des revendications précédentes, caractérisé par le fait que la cuve (W) peut être fermée d'une manière étanche aux gaz et que l'espace situé au-dessus du bain de traitement peut être rempli avec un gaz inerte (Ig).